(19) Europäisches Patentamt
European Patent Office
Office européen des brevets

(11) Publication number: 0 193 146 B1

# (12) EUROPEAN PATENT SPECIFICATION

(45) Date of publication of patent specification: 15.07.92 (51) Int. Cl.5: C08F 4/62, C08F 10/02

(21) Application number: 86102336.4

(22) Date of filing: 22.02.86

## (54) Process for production of ethylene-based polymers.

(30) Priority: 25.02.85 JP 34547/85
15.03.85 JP 51650/85
25.04.85 JP 87627/85
26.04.85 JP 88900/85
11.10.85 JP 224889/85

(43) Date of publication of application:
03.09.86 Bulletin 86/36

(45) Publication of the grant of the patent:
15.07.92 Bulletin 92/29

(84) Designated Contracting States:
AT BE CH DE FR GB IT LI NL SE

(56) References cited:
BE-A- 861 092
FR-A- 2 300 773
GB-A- 1 184 831

Holleman-Wiberg, Lehrbuch der Anorganische Chemie, 81-90. Auflage, Walter de Gruyter, Berlin, New York, 1976, pages 122 and 123

(73) Proprietor: IDEMITSU KOSAN COMPANY LIMITED
1-1, Marunouchi 3-chome Chiyoda-ku
Tokyo(JP)

(72) Inventor: Kuramoto, Masahiko
No. 1218-2, Kamiizumi Sodegaura-machi
Kimitsu-gun Chiba-ken(JP)
Inventor: Soga, Kazuo
No. 30-2, Enokigaoka Midori-ku
Yokohama-shi Kanagawa(JP)
Inventor: Tanaka, Masato
No. 1727, Kamiizumi Sodegaura-machi
Kimitsu-gun Chiba-ken(JP)
Inventor: Ishihara, Nobuhide
No. 1218-2, Kamiizumi Sodegaura-machi
Kimitsu-gun Chiba-ken(JP)
Inventor: Uoi, Michitake
No. 5336-40, Goi
Ichihara-shi Chiba-ken(JP)

(74) Representative: Türk, Dietmar, Dr. rer. nat. et al
Türk, Gille + Hrabal Patentanwälte Brucknerstrasse 20
W-4000 Düsseldorf 13(DE)

EP 0 193 146 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

The present invention relates to a process for the production of ethylene-based polymers, and more particularly, it relates to a process for efficiently producing ethylene-based polymers by polymerizing ethylene or ethylene and other α-olefins using a catalyst comprising a specific transition metal compound component and a specific organo metallic compound component.

The polymerization of ethylene by the use of catalysts comprising chromium compounds and organoaluminum compounds is already known from JP-A-106 692/76 and FR-A-23 00 773.

GB-A-1 184 831 describes catalysts for the production of homopolymers and interpolymers of ethylenically unsaturated monomers, wherein the catalysts are prepared by reacting a chromium compound component with an activating aluminum compound component, both components containing halogen and chromium in the atomic ratio of from 2:1 to 5:1. In BE-A-861 092 catalysts which are particularly active in the polymerisation of ethylene, α-olefins and mixtures thereof are described wherein the catalysts are prepared by contacting a chromium anhydride compound with a support comprising a magnesium dihalide and thereafter adding an alkyl aluminum compound to the obtained reaction product.

However, all conventional methods for the production of ethylene-based polymers have the disadvantages that the catalysts used therein are poor in polymerization activity and the polymerization pressure should be as high as several ten atmospheric pressure.

### SUMMARY OF THE INVENTION

The present inventors, therefore, have made extensive investigations on a process whereby the prior art problems of poor polymerization activity of the catalyst can be overcome and polymerization can be carried out at relatively low pressure.

Thus, the object of the present invention is to provide a process for efficiently producing ethylene-based polymers by using novel catalysts having a higher catalytic activity than the conventionally used polymerization catalysts.

It has been found that this object of the invention can be attained by using a reacting product of a specific chromium compound and a specific magnesium and/or manganese compound in combination with a halogen-containing alkylaluminum compound. Based on these findings, the present invention has been accomplished.

Subject-matter of the present invention is a process for producing ethylene-based polymers by polymerizing ethylene or ethylene and other α-olefins which is characterized by using a catalyst consisting essentially of

(A) a reaction product obtainable by reacting (i) a chromium compound consisting of carboxylic acid salts of chromium and/or chromium chelate compounds with (ii) a metal compound selected from the group consisting of carboxylic acid salts of magnesium, organic phosphorus-containing magnesium and carboxylic acid salts of manganese, and

(B) a halogen-containing alkylaluminum compound.

Preferred embodiments of the process of the present invention are described in the subclaims.

The process of the present invention has various advantages over the conventional method. One of the advantages is that the catalyst activity is essentially higher than that of the conventional chromium catalyst. Another advantage is that the ethylene-based polymers obtained according to the present invention have a high mechanical strength when injection molded. In addition, according to the present invention, ethylene-based polymers having a narrow distribution of molecular weight can be obtained. Thus, the process of the present invention permits the efficient production of ethylene-based polymers having an excellent mechanical strength.

The component (A) of the catalyst which is used in the process of the present invention is, as described above, a reaction product of (i) at least one chromium compound selected from the group consisting of carboxylic acid salts of chromium, and chromium chelate compounds with (ii) a metal compound, selected from the group consisting of carboxylic acid salts of magnesium, organic phosphorus-containing magnesium and carboxylic acid salts of manganese.

Various carboxylic acid salts of chromium can be used. Usually compounds represented by the general formula are used:

$$Cr(R'COO)_3 \text{ or } Cr(R'COO)_3 \cdot (R'CO)_2O$$

wherein R' is an alkyl group having 1 to 20 carbon atoms, an aryl group or an aralkyl group.

Specifically, aliphatic carboxylic acid salts, e.g., $Cr(CH_3COO)_3$, $Cr(C_2H_5COO)_3$, $Cr(C_3H_7COO)_3$, and $Cr(C_{17}H_{35}COO)_3$, aromatic carboxylic acid salts, e.g., $Cr(C_6H_5COO)_3$ and $Cr(CH_3C_6H_5COO)_3$, and adducts, e.g., $Cr(CH_3COO)_3 \cdot (CH_3CO)_2O$ can be used.

The above chromium chelate compound includes chromium trisacetylacetonate represented by the formula: $Cr(acac)_3$, chromium tris(2-methyl-1,3-butanedionate) represented by the formula: $Cr(mbd)_3$, and chromium tris(1,3-butanedionate) represented by the formula: $Cr(bd)_3$. The symbol "-(acac)" indicates an acetylacetonate group.

Chromium trisacetylacetonate has the following structural formula:

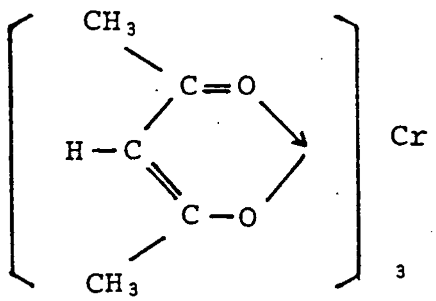

The symbol "(mbd)" indicates a 2-methyl-1,3-butanedionate group.

Chromium tris(2-methyl-1,3-butanedionate) has the following structural formula:

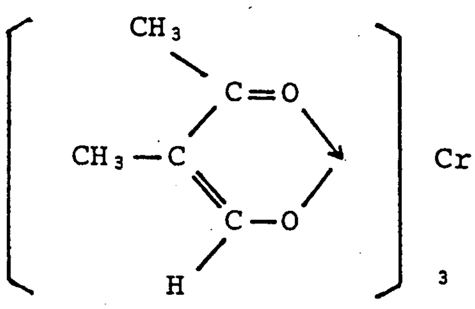

The symbol "(bd)" indicates a 1,3-butanedionate group.

Chromium tris(1,3-butanedionate) has the following structural formula:

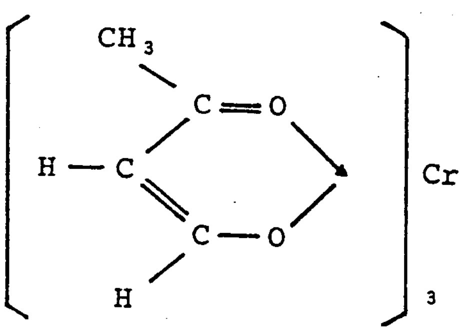

As the metal compound (ii) to be reacted with the above chromium compound (i), a metal compound, selected from the group consisting of carboxylic acid salts of magnesium, organic phosphorus-containing magnesium and carboxylic acid salts of manganese can be used.

Typical examples of the metal compound (ii) are specific magnesium compounds, and manganese compounds.

The magnesium compound includes carboxylic acid salts of magnesium, and organic phosphorus-containing magnesium.

The manganese compound includes carboxylic acid salts of manganese.

More specifically, these magnesium and manganese salts are magnesium carboxylates represented by the general formula:

$Mg(R^2COO)_2$ or $Mg(R^2COO)X$

wherein $R^2$ is an alkyl group having 1 to 20 carbon atoms, an aryl group or an aralkyl group, and X is a halogen atom,

and manganese carboxylates represented by the general formula:

$Mn(R^2COO)_2$ or $Mn(R^2COO)X$

wherein $R^2$ and X are the same as defined above.

In the above general formulae, $R^2$ is preferably an aliphatic alkyl group having not less than 6 carbon atoms and more preferably an aliphatic alkyl group having not less than 8 carbon atoms. Typical examples are a hexyl group, a heptyl group, an octyl group, a 2-ethylhexyl group, a nonyl group, a decyl group, a lauryl group, a myristyl group, a heptadecyl group, a stearyl group and an octadecenyl group. In addition, unsaturated alkyl groups such as an oleyl group can be used.

There are many organic phosphorus-containing magnesium compounds, and any of these compounds can be used. Preferred are compounds obtained by reacting organomagnesium compounds with hydrogen-containing phosphorus compounds. Suitable examples of the organomagnesium compounds are compounds represented by the general formula:

$R^3R^4M$

wherein $R^3$ and $R^4$ are each an alkyl group having 1 to 10 carbon atoms or an aryl group, and M is magnesium,

or by the general formula

$R^3MX$

wherein $R^3$ is an alkyl group having 1 to 10 carbon atoms, or an aryl group, M is magnesium and X is a halogen atom.

Typical examples are ethylbutylmagnesium, dibutylmagnesium, diethylmagnesium, dihexylmagnesium, ethylmagnesium chloride, and ethylmagnesium iodide. In addition, the organoaluminum or organozinc complexes of the above compounds can be used.

Examples of the hydrogen-containing phosphorus compounds are alkyl or arylphosphines such as methylphosphine, ethylphosphine, propylphosphine, butylphosphine, and phenylphosphine; dialkyl or diarylphosphines such as diethylphosphine, dipropylphosphine, dibutylphosphine, and diphenylphosphine; alkyl or arylphosphonic acids such as ethylphosphonic acid and propylphosphonic acid; dialkyl or diarylphosphinic acids such as diethylphosphinic acid, dipropylphosphinic acid, dibutylphosphinic acid, didodecylphosphinic acid, and diphenylphosphinic acid; phosphorous acid esters such as methyl phosphite, butyl phosphite, dimethyl phosphite, dipropyl phosphite, dibutyl phosphite, dodecyl phosphite, dilauryl phosphite, dioleyl phosphite, and diphenyl phosphite; and phosphoric acid esters such as ethyl phosphate, propyl phosphate, dipropyl phosphate, dibutyl phosphate, dioctyl phosphate, and didodecyl phosphate.

There are no special limitations to a method of reaction between the chromium compound (i) and the metal compound (ii).

Usually they are added in their respective suitable solvents and stirred at a temperature of 0 to 200 °C, preferably 30 to 100 °C for a time of 5 to 60 minutes.

The mixing ratio of the chromium compound (i) to the metal compound (ii) varies with the type of each compound used and so forth. In general, as the amount of the metal compound (ii) used is greater than that of the chromium compound (i), the activity of the resulting catalyst is more increased.

Specifically, the ratio of metal atom such as magnesium atom and manganese atom in the metal compound (ii) to chromium atom in the chromium compound (i) is appropriately chosen in a range of 1 : 1 to 100 : 1 (by mole), preferably 20 : 1 to 50 : 1 (by mole).

In the process of the present invention, thus obtained reaction product is used as the component (A), and as the component (B), a halogen-containing alkylaluminum compound is used.

Halogen-containing alkylaluminum compounds which can be used as the component (B) include dialkylaluminum monohalide such as dimethylaluminum monochloride, diethylaluminum monochloride, diisopropylaluminum monochloride, diisobutylaluminum monochloride, and dioctylaluminum monochloride; monoalkylaluminum dihalide such as methylaluminum dichloride, ethylaluminum dichloride and isobutylaluminum dichloride; alkylaluminum sesquihalide such as methylaluminum sesquichloride, ethylaluminum sesquichloride and ethylaluminum sesquibromide, and their mixtures. In addition, mixtures of the above compounds and trialkylaluminum can be used. Of these compounds, dialkylaluminum monohalide is particularly preferred.

In accordance with the process of the present invention, ethylene or ethylene and other α-olefins are polymerized by the use of a catalyst comprising the above components (A) and (B) as the major components. This method of polymerization and polymerization conditions, for example, are not critical. Any of solution polymerization, suspension polymerization, gas phase polymerization and so forth can be employed. Moreover the polymerization can be carried out either continuously or non-continuously. In this case, as the polymerization solvent, aliphatic hydrocarbons, alicyclic hydrocarbons, aromatic hydrocarbons, and halogenated hydrocarbons can be used.

In the case of solution polymerization or suspension polymerization, for example, the amount of the catalyst components used are such that the amount of the component (A) is 0.001 to 5.0 millimoles per liter (mmol/l), preferably 0.005 to 1 mmol/l (calculated as chromium atom), and the aluminum atom in the component (B) is 1 to 5,000 moles, preferably 5 to 1,000 moles per mole of the chromium atom in the component (A). The olefin pressure in the reaction system is atmospheric pressure to 49 bar G (50 kilograms per square centimeter by gauge ($kg/cm^2G$)), and the reaction temperature is 0 to 150 °C and preferably 20 to 80 °C. Controlling the molecular weight can be carried out by known techniques such as polymerization in the presence of hydrogen gas and polymerization under control of temperature.

The process of the present invention includes both homopolymerization of ethylene and copolymerization of ethylene and other α-olefins.

The process of the present invention yields various advantages over the conventional methods. One of the advantages is that the catalyst activity is greatly higher than those of the conventional chromium catalysts.

Another advantage is that the ethylene-based polymers obtained have a high mechanical strength when injection molded.

In addition, according to the present invention, the ethylene-based polymers having a narrow distribution of molecular weight can be obtained.

Thus the process of the present invention permits to quite efficiently produce ethylene-based polymers having an excellent mechanical strength.

The present invention is described in greater detail with reference to the following examples.

EXAMPLE 1 (comparative)

(1) Preparation of Catalyst Components

Chromium acetate monohydrate [$Cr(6H_3COO)_3 \cdot H_2O$] was treated with a mixture of acetic anhydride and acetic acid at 120°C for 4 hours. Then an excess of acetic anhydride and acetic acid were removed under reduced pressure to obtain an adduct represented by the formula:

$Cr(CH_3COO)_3 \cdot (CH_3CO)_2O$.

0.84 millimoles (mmol) of the above adduct was dissolved in 167 mmol of 2-ethyl-1-hexanol to prepare a solution (I). 10 mmol of magnesium chloride was dissolved in 90 mmol of 2-ethyl-1-hexanol to prepare a solution (II).

(2) Polymerization of Ethylene

In a 300-milliliter reactor equipped with a magnetic stirrer were placed 0.016 mmol (calculated as the adduct) of the above prepared solution (I) and 0.6 mmol (calculated as magnesium chloride) of the above prepared solution (II), and 160 milliliter (ml) of toluene in an atmosphere of nitrogen.

After slightly decreasing the pressure in the reactor, ethylene was introduced into the reactor. After saturation with ethylene, the mixture was stirred at 30°C for 20 minutes to prepare a reaction product of the above adduct and magnesium chloride. Then 14 mmol of diethylaluminum monochloride was added. Polymerization of ethylene was performed at 30°C under ordinary pressure for 24 minutes.

4.6 grams (g) of polyethylene was produced. The catalyst activity was, when indicated in terms of an amount of polyethylene per gram of chromium atom, 6 kilograms (kg) (6 kg/g.Cr). The polyethylene thus produced was measured for molecular weight by Gel Permeation chromatography (GPC) at 145°C using 1,2,4-trichlorobenzene as a solvent. The weight average molecular weight (Mw) was 3,300,000 and the number average molecular weight (Mn) was 1,530,000. The ratio of the weight average molecular weight to the number average molecular weight, Mw/Mn, was 2.2.

COMPARATIVE EXAMPLE 1

The procedure of Example 1 was repeated wherein magnesium chloride as the catalyst component was not added.

The yield of polyethylene was 0.5 g and the catalyst activity was 0.6 kg/g.Cr. For the polyethylene produced, Mw was 616,000 and Mn was 17,000; Mw/Mn was 35.5.

EXAMPLE 2 (comparative)

The procedure of Example 1 was repeated wherein manganese chloride was used in place of magnesium chloride as the catalyst component.

The yield of polyethylene was 2.7 g and the catalyst activity was 3 kg/g.Cr.

EXAMPLE 3 (comparative)

The procedure of Example 1 (2) was repeated wherein ethylaluminum sesquichloride was used in place of diethylaluminum monochloride.

The yield of polyethylene was 1.0 g and the catalyst activity was 1 kg/g.Cr.

COMPARATIVE EXAMPLE 2

The procedure of Example 1 was repeated wherein aluminum chloride was used in place of magnesium chloride as the catalyst component.

The yield of polyethylene was 0.05 g and the catalyst activity was 0.07 kg/g.Cr.

COMPARATIVE EXAMPLE 3

The procedure of Example 1 was repeated wherein niobium pentachloride was used in place of magnesium chloride as the catalyst component.

The yield of polyethylene was 0.02 g and the catalyst activity was 0.03 kg/g.Cr.

EXAMPLE 4 (comparative)

In a 1-liter autoclave the atmosphere of which had been replaced with argon were placed 400 milliliters (ml) of toluene, and, 0.008 mmol (calculated as the adduct) of the solution (I) and 0.3 mmol (calculated as magnesium chloride) of the solution (II), said solutions (I) and (II) being the same as prepared in Example 1 (1), and the resulting mixture was stirred at 50°C for 20 minutes. Then 7 mmol of diethylaluminum monochloride was added thereto. While continuously feeding ethylene in such a manner that the ethylene pressure was 8 bar G (8 kg/cm$^2$G), polymerization was performed for 1 hour.

The yield of polyethylene was 48 g and the catalyst activity was 116 kg/g.Cr.

EXAMPLE 5 (comparative)

The procedure of Example 4 was repeated wherein a toluene solution of chromium stearate [$Cr(C_{17}H_{35}COO)_3$] was used in place of the solution (I) as the catalyst component.

The yield of polyethylene was 63 g and the catalyst activity was 151 kg/g.Cr.

COMPARATIVE EXAMPLE 4

The procedure of Example 4 was repeated wherein a toluene solution of chromium stearate [$Cr(C_{17}H_{35}COO)_3$] was used in place of the solution (I) as the catalyst component and the solution (II) of magnesium chloride was not used.

The yield of polyethylene was 0.6 g and the catalyst activity was 1 kg/g.Cr.

EXAMPLE 6 (comparative)

(1) Preparation of Catalyst Component

556 mg (1.61 mmol) of chromium tetra-tert-butoxide was dissolved in 50 ml of toluene to prepare a solution (I). 10 mmol of magnesium chloride was dissolved in 90 mmol of 2-ethyl-1-hexanol to prepare a solution (II).

(2) Polymerization of Ethylene

In a 300-milliliter reactor equipped with a magnetic stirrer were placed 0.016 mmol (calculated as chromium atom) of the above prepared solution (I) and 0.64 mmol (calculated as magnesium chloride) of the above prepared solution (II), and 160 milliliter (ml) of toluene in an atmosphere of nitrogen.

After slightly decreasing the pressure in the reactor, ethylene was introduced into the reactor. After saturation with ethylene, the mixture was stirred at 30°C for 20 minutes. Then 48 mmol of diethylaluminum monochloride was added. Polymerization of ethylene was performed at 30°C under ordinary pressure for 24 minutes.

11 grams (g) of polyethylene was produced. The catalyst activity was 13 kg/g.Cr. The polyethylene thus produced was measured for molecular weight. The weight average molecular weight (Mw) was 946,000 and the number average molecular weight (Mn) was 448,000; Mw/Mn was 2.1.

COMPARATIVE EXAMPLE 5

The procedure of Example 6 was repeated wherein magnesium chloride, as the catalyst component was not added.

The yield of polyethylene was 1.1 g and the catalyst activity was 1.4 kg/g.Cr. For the polyethylene produced, Mw was 477,000 and Mn was 10,800; Mw/Mn was 44.1.

EXAMPLE 7 (comparative)

The procedure of Example 6 was repeated wherein manganese chloride was used in place of magnesium chloride as the catalyst component.

The yield of polyethylene was 6.0 g and the catalyst activity was 7.2 kg/g.Cr.

COMPARATIVE EXAMPLE 6

The procedure of Example 6 was repeated wherein aluminum chloride was used in place of magnesium chloride as the catalyst component.

The yield of polyethylene was 1.2 g and the catalyst activity was 1.5 kg/g.Cr.

COMPARATIVE EXAMPLE 7

The procedure of Example 6 was repeated wherein niobium pentachloride was used in place of magnesium chloride as the catalyst component.

The yield of polyethylene was 0.9 g and the catalyst activity was 1.1 kg/g.Cr.

EXAMPLE 8 (comparative)

In a 1-liter autoclave the atmosphere of which had been replaced with argon were placed 400 milliliters (ml) of toluene, and 0.008 mmol (calculated as chromium atom) of the solution (I) and 0.32 mmol (calculated as magnesium chloride) of the solution (II), said solutions (I) and (II) being the same as prepared in Example 6 (1), and the resulting mixture was stirred at 40°C for 20 minutes. Then 3.5 mmol of diethylaluminum monochlorid was added. While continuously feeding ethylene in such a manner that the ethylene pressure was 8 bar G (8 $kg/cm^2$G), polymerization was performed for 1 hour.

The yield of polyethylene was 33 g and the catalyst activity was 78 kg/g.Cr.

EXAMPLE 9 (comparative)

The procedure of Example 8 was repeated wherein the amount of diethylaluminum monochloride was changed from 3.5 mmol to 7 mmol.

The yield of polyethylene was 76 g and the catalyst activity was 182 kg/g.Cr.

EXAMPLE 10

(1) Preparation of Catalyst Component (A)

Chromium acetate monohydrate [$Cr(CH_3COO)_3 \cdot H_2O$] was treated with a mixture of acetic anhydride and acetic acid at 120°C for 4 hours, and upon removal of an excess of acetic anhydride and acetic acid under reduced pressure, an adduct represented by the formula: $Cr(CH_3COO)_3 \cdot (CH_3CO)_2O$ was obtained.

In a 200-milliliter flask the atmosphere of which had been replaced with argon were placed 100 ml of dehydrated toluene, 2.21 g (3.8 mmol) of magnesium stearate, and 0.13 g (0.38 mmol) of the adduct prepared above, which were then reacted at

100 ° C for 2 hours. The reaction product thus obtained was used as the catalyst component (A).

(2) Polymerization of Ethylene

In a 1-liter autoclave the atmosphere of which had been replaced with argon were placed 400 ml of dehydrated toluene, 2 mmol of diethylaluminum monochloride, and 0.005 mmol (calculated as chromium atom) of the catalyst component (A) as obtained in (1) above. The temperature was raised to 50 ° C. Ethylene was polymerized for 1 hour while continuously feeding it so that the ethylene partial pressure was 8 bar (8 kg/cm$^2$).

The yield of polyethylene was 26 g and the catalyst activity was, as indicated in terms of the amount of polyethylene formed per gram of chromium and per hour 98 kg (98 kg/g.Cr.hr). The intrinsic solution viscosity ($\eta$) as determined in a decaline solvent at 135 ° C of the polyethylene was 32.1 dl/g.

The intrinsic solution viscosity ($\eta$) in the subsequent examples was determined in the same manner as above.

EXAMPLE 11

(1) Preparation of Catalyst Component (A)

In a 200-milliliter flask the atmosphere of which had been replaced with argon were placed 100 ml of dehydrated toluene, 2.21 g (3.8 mmol) of magnesium stearate, and 0.34 g (0.38 mmol) of chromium stearate, which were then reacted at 100 ° C for 2 hours. The reaction product thus obtained was used as the catalyst component (A).

(2) Polymerization of Ethylene

The procedure of Example 10 (2) was repeated wherein as the catalyst component (A), 0.005 mmol (calculated as chromium atom) of the product as obtained in (1) above was used.

The yield of polyethylene was 35.5 g and the catalyst activity was 137 kg/g.Cr.hr. The intrinsic solution viscosity ($\eta$) of the polyethylene was 41.0 dl/g.

EXAMPLE 12

(1) Preparation of Catalyst Component (A)

In a 200-milliliter flask the atmosphere of which had been replaced with argon were placed 50 ml of dehydrated heptane and 6.45 g (20 mmol) of di-2-ethylhexyl phosphate, and then 30 ml of a heptane solution of 10 mmol of ethylbutylmagnesium was dropped thereto at room temperature over 20 minutes. Thereafter the temperature was raised, and they were reacted for 3 hours while refluxing the heptane. At the end of the period, the heptane was distilled away, and 100 ml of toluene was added and then 0.90 g (1 mmol) of chromium stearate was added. They were reacted at 100 ° C for 2 hours. The reaction product thus obtained was used as the catalyst component (A).

(2) Polymerization of Ethylene

The procedure of Example 10 (2) was repeated wherein as the catalyst component (A), 0.005 mmol (calculated as chromium atom) of the product as obtained in (1) above was used.

The yield of polyethylene was 27.3 g and the catalyst activity was 105 kg/g.Cr.hr. The intrinsic solution viscosity ($\eta$) of the polyethylene was 22.9 dℓ/g.

EXAMPLE 13

(1) Preparation of Catalyst Component (A)

In a 200-milliliter flask the atmosphere of which had been replaced with argon were placed 100 ml of dehydrated toluene, 2.21 g (3.8 mmol) of magnesium stearate, and 0.09 g (0.1 mmol) of chromium stearate, which were then reacted at 100 ° C for 2 hours. The reaction product thus obtained was used as the catalyst component (A).

(2) Polymerization of Ethylene

The procedure of Example 10 (2) was repeated wherein as the catalyst component (A), 0.005 mmol (calculated as chromium atom) of the product as obtained in (1) above was used.

The yield of polyethylene was 70.4 g and the catalyst activity was 276 kg/g.Cr.hr. The intrinsic solution viscosity ($\eta$) of the polyethylene was 37.3 dl/g.

EXAMPLE 14

(1) Preparation of Catalyst Component (A)

The procedure of Example 13 (1) was repeated wherein 2.33 g (3.8 mmol) of manganese stearate was used in place of magnesium stearate to prepare a catalyst component (A).

(2) Polymerization of Ethylene

The procedure of Example 10 (2) was repeated wherein as the catalyst component (A), 0.005 mmol (calculated as chromium atom) of the product as obtained in (1) above was used.

The yield of polyethylene was 55.1 g and the catalyst activity was 212 kg/g.Cr.hr. The intrinsic solution viscosity (η) of the polyethylene was 37.1 dl/g.

Example 15

The procedure of Example 10 (2) was repeated wherein as the catalyst component (A), the product as obtained in Example 13 (1) was used, and a mixture of 1 mmol of triethylaluminum and 1 mmol of diethylaluminum monochloride was used in place of the diethylaluminum monochloride.

The yield of polyethylene was 22.6 g and the catalyst activity was 87 kg/g.Cr.hr. The intrinsic solution viscosity (η) of the polyethylene was 24.7 dl/g.

COMPARATIVE EXAMPLE 8

The procedure of Example 10 (2) was repeated wherein as the catalyst component (A), 0.008 mmol of a compound having the formula: $Cr(CH_3COO)_3 \cdot (CH_3CO)_2O$ was used, and the amount of diethylaluminum monochloride used was changed to 7 mmol.

The yield of polyethylene was 0.3 g and the catalyst activity was 1 kg/g.Cr.hr.

COMPARATIVE EXAMPLE 9

The procedure of Example 10 (2) was repeated wherein as the catalyst component (A), 0.005 mmol of chromium stearate was used.

The yield of polyethylene was 0.3 g and the catalyst activity was 1 kg/g.Cr.hr.

EXAMPLE 16 (comparative)

(1) Preparation of Catalyst Component (A)

556 mg (1.61 mmol) of chromium tetra-tert-butoxide was dissolved in 50 ml of toluene to prepare a solution (I).

In a 200-milliliter flask the atmosphere of which had been replaced with argon were placed 50 ml of dehydrated heptane and 6.45 g (20 mmol) of di-2-ethylhexyl phosphate, and then 30 ml of heptane solution of 10 mmol of ethylbutylmagnesium was dropped thereto at room temperature over 20 minutes. Then the temperature was raised, and they were reacted for 3 hours while refluxing the heptane. The heptane was distilled away, and 100 ml of toluene was added to prepare a solution (II).

(2) Polymerization of Ethylene

In a 1-liter autoclave the atmosphere of which had been replaced with argon were placed 400 ml of toluene, 0.008 mmol (calculated as chromium atom) of the solution (I) as obtained in Example 16 (1), and 0.32 mmol (calculated as magnesium atom) of the solution (II) as obtained in Example 16 (1), which were then stirred at 40 °C for 20 minutes. Then 5 mmol of diethylaluminum monochloride was added. Ethylene was polymerized for 1 hour while continuously feeding it so that the ethylene pressure was 8 bar G 8 kg/cm$^2$G).

The yield of polyethylene was 96 g and the catalyst activity was 231 kg/g.Cr.

EXAMPLE 17 (comparative)

The procedure of Example 16 (2) was repeated wherein the amount of the solution (II) used was changed to 0.64 mmol.

The yield of polyethylene was 88 g and the catalyst activity was 212 kg/g.Cr.

COMPARATIVE EXAMPLE 10

The procedure of Example 16 (2) was repeated wherein the solution (II) was not used.

The yield of polyethylene was 0.7 g and the catalyst activity was 1.7 kg/g.Cr.

EXAMPLE 18 (comparative)

The procedure of Example 16 (2) was repeated wherein 5 mmol of diisobutylaluminum monochloride was used in place of the diethylaluminum monochloride.

The yield of polyethylene was 11 g and the catalyst activity was 27 kg/g.Cr.

EXAMPLE 19 (comparative)

The procedure of Example 16 (2) was repeated wherein a mixture of 2.5 mmol of triethylaluminum and 2.5 mmol of diethylaluminum monochloride was used in place of 5 mmol of the diethylaluminum monochloride.

The yield of polyethylene was 21 g and the catalyst activity was 51 kg/g.Cr.

EXAMPLE 20 (comparative)

The procedure of Example 16 (2) was repeated wherein 190 mg (0.32 mmol) of magnesium stearate was used in place of the solution (II), and the amount of diethylaluminum monochloride used was changed to 7 mmol.

The yield of polyethylene was 20 g and the catalyst activity was 49 kg/g.Cr.

EXAMPLE 21 (comparative)

The procedure of Example 16 (2) was repeated wherein 196 mg (0.32 mmol) of manganese stearate was used in place of the solution (II), and the amount of diethylaluminum monochloride used was changed to 7 mmol.

The yield of polyethylene was 16 g and the catalyst activity was 38 kg/g.Cr.

EXAMPLE 22

(1) Preparation of Catalyst Component (A) (i) and A(ii)

① Preparation of Catalyst Component (A) (i)

2.1 g (6 mmol) of chromium triacetylacetonate was dissolved in 200 ml of toluene to prepare Catalyst Component A(i).

② Preparation of Catalyst Component A(ii)

In a 200-milliliter flask the atmosphere of which had been replace with argon were placed 50 ml of heptane and 6.45 g (20 mmol) of di-2-ethylhexyl phosphate, and then 30 ml of a heptane solution of 10 mmol of ethylbutylmagnesium was dropped thereto at room temperature over 20 minutes. Thereafter the temperature was raised, and they were reacted for 3 hours while refluxing the heptane. At the end of the period, the heptane was distilled away, and 100 ml of toluene was added to prepare Catalyst Component A(ii).

(2) Polymerization of Ethylene

In a 1-liter autoclave the atmosphere of which had been replaced with argon were placed 400 ml of toluene, and then 0.008 mmol (calculated as chromium atom) of the catalyst component A(i) as obtained in (1) above and 0.32 mmol (calculated as magnesium atom) of the catalyst component A(ii) as obtained in (1) above were added thereto, and stirred at 40 °C for 20 minutes to prepare a mixture (catalyst component (A)).

Thereafter 7 mmol of diethylaluminum monochloride as catalyst component (B) was added to the above resulting mixture, and while continuously feeding ethylene in such a manner that the ethylene pressure was 8 bar G (8 $kg/cm^2G$), polymerization was performed for 1 hour.

The yield of polyethylene was 85.4 g and the catalyst activity was 205 kg/g.Cr.

EXAMPLE 23

The procedure of Example 22 (2) was repeated wherein the amount of catalyst component A(ii) was changed from 0.32 to 0.64 mmol (as calculated magnesium atom).

The yield of polyethylene was 92 g and the catalyst activity was 221 kg/g.Cr.

COMPARATIVE EXAMPLE 11

The procedure of Example 22 (2) was repeated wherein catalyst component A(ii) was not added.

The yield of polyethylene was 0.32 g and the catalyst activity was 0.77 kg/g.Cr.

EXAMPLE 24

The procedure of Example 22 (2) was repeated wherein 7 mmol of diisobutylaluminum monochloride was used in place of diethylaluminum chloride as catalyst component (B).

The yield of polyethylene was 35.1 g and the catalyst activity was 84 kg/g.Cr.

EXAMPLE 25

The procedure of Example 22 (2) was repeated wherein a mixture of 3.5 mmol of triethylaluminum and 3.5 mmol of diethylaluminum monochloride was used in place of diethylaluminum monochloride as catalyst component (B).

The yield of polyethylene was 48.6 g and the catalyst activity was 117 kg/g.Cr.

EXAMPLE 26

The procedure of Example 22 (2) was repeated wherein 0.19 g (0.32 mmol) of magnesium stearate was used in place of catalyst component A(ii).

The yield of polyethylene was 27.9 g and the catalyst activity was 67 kg/g.Cr.

EXAMPLE 27

The procedure of Example 22 (2) was repeated wherein 0.196 g (0.32 mmol) of manganese stearate was used in place of catalyst component A(ii).

The yield of polyethylene was 20.4 g and the catalyst activity was 49 kg/g.Cr.

EXAMPLE 28 (comparative)

(1) Preparation of Catalyst Component A(i)

In a 200-milliliter flask the atmosphere of which had been replaced with argon, 1.22 g (6.7 mmol) of bis-cyclopentadienyl chromium was dissolved in 200 ml of toluene to prepare a catalyst component A(i).

(2) Polymerization of Ethylene

The procedure of Example 22 (2) was repeated wherein as the catalyst component A(i), 0.008 mmol (calculated as chromium atom) of the product as obtained in (1) above was used.

The yield of polyethylene was 22 g and the catalyst activity was 53 kg/g.Cr.

COMPARATIVE EXAMPLE 12

The procedure of Example 28 (2) was repeated wherein the catalyst component A(ii) was not used.

The yield of polyethylene was 0.77 g and the catalyst activity was 1.9 kg/g.Cr.

EXAMPLE 29 (comparative)

(1) Preparation of Catalyst Component A(i)

In a 200-milliliter flask the atmosphere of which had been replaced with argon, 1.51 g (7.33 mmol) of diphenyl chromium was dissolved in 200 ml of toluene to prepare a catalyst component A(i).

(2) Polymerization of Ethylene

The procedure of Example 22 (2) was repeated wherein as the catalyst component A(i), 0.008 mmol (calculated as chromium atom) of the product as obtained in (1) above was used.

The yield of polyethylene was 26 g and the catalyst activity was 63 kg/g.Cr.

COMPARATIVE EXAMPLE 13

The procedure of Example 29 (2) was repeated wherein the catalyst component A(ii) was not used.

The yield of polyethylene was 0.42 g and the catalyst activity was 1.0 kg/g.Cr.

## Claims

1. Process for producing ethylene-based polymers by polymerizing ethylene or ethylene and other $\alpha$-olefins , **characterized** by using a catalyst consisting essentially of
   (A) a reaction product obtainable by reacting (i) a chromium compound consisting of carboxylic acid salts of chromium and/or chromium chelate compounds with (ii) a metal compound selected from the group consisting of carboxylic acid salts of magnesium, organic phosphorus-containing magnesium and carboxylic acid salts of manganese, and
   (B) a halogen-containing alkylaluminum compound.

2. The process as claimed in claim 1, wherein the carboxylic acid salt of chromium is a compound represented by the general formula: $Cr(R'COO)_3$ or $Cr(R'COO)_3 \cdot (R'CO)_2O$, R' being an alkyl group having 1 to 20 carbon atoms, an aryl group or an aralkyl group.

3. The process as claimed in Claim 2, wherein R' is a methyl group.

4. The process as claimed in Claim 1, wherein the chromium chelate compound is chromium trisacetylacetonate represented by the formula: $Cr(acac)_3$, the symbol "acac" indicating an acetylacetonate group.

5. The process as claimed in Claim 1, wherein the carboxylic acid salt of chromium is chromium stearate.

6. The process as claimed in any of Claims 1 to 5, wherein the carboxylic acid salt of magnesium is magnesium stearate.

7. The process as claimed in any of Claims 1 to 5, wherein the carboxylic acid salt of manganese is manganese stearate.

8. The process as claimed in any of Claims 1 to 5, wherein the organic phosphorus-containing magnesium is obtained by reacting organomagnesium with hydrogen-containing phosphorus compounds.

9. The process as claimed in Claim 8, wherein the organo -magnesium compound is ethylbutylmagnesium.

10. The process as claimed in any of Claims 1 to 9, wherein the halogen-containing alkylaluminum compound is dialkylaluminum monohalide.

11. The process as claimed in Claim 10, wherein the dialkylaluminum monohalide is diethylaluminum monochloride.

12. The process as claimed in Claim 10, wherein the dialkylaluminum monohalide is diisobutylaluminum monochloride.

13. The process as claimed in any of Claims 1 to 12, wherein a mixture of dialkylaluminum monohalide with trialkylaluminum is used.

14. The process as claimed in any of Claims 1 to 13 wherein the reaction product of the compound (i) with the compoupd (ii) is obtained by adding these components in their respective

suitable solvents and stirring at a temperature of 0 to 200 ° C.

## Revendications

**1.** Procédé de production de polymères à base d'éthylène par polymérisation d'éthylène ou d'éthylène et autres α-oléfines, caractérisé par l'utilisation d'un catalyseur constitué essentiellement de

(A) un produit réactionnel pouvant être obtenu en faisant réagir (i) un composé du chrome consistant en sels d'acides carboxyliques de chrome et/ou chélates de chrome avec (ii) un composé de métal choisi dans le groupe formé par les sels d'acides carboxyliques de magnésium, les composés de magnésium organiques phosphorés et les sels d'acides carboxyliques de manganèse, et

(B) un composé d'alkylaluminium halogéné.

**2.** Procédé selon la revendication 1, dans lequel le sel d'acide carboxylique de chrome est un composé représenté par la formule générale : $Cr(R'COO)_3$ ou $Cr(R'COO)_3 \cdot (R'CO)_2O$, R' étant un groupe alkyle de 1 à 20 atomes de carbone, un groupe aryle ou un groupe aralkyle.

**3.** Procédé selon la revendication 2, dans lequel R' est un groupe méthyle.

**4.** Procédé selon la revendication 1, dans lequel le chélate de chrome est le trisacétylacétonate de chrome représenté par la formule : $Cr(acac)_3$, le symbole "acac" représentant un groupe acétylacétonate.

**5.** Procédé selon la revendication 1, dans lequel le sel d'acide carboxylique de chrome est le stéarate de chrome.

**6.** Procédé selon l'une quelconque des revendications 1 à 5, dans lequel le sel d'acide carboxylique de magnésium est le stéarate de magnésium.

**7.** Procédé selon l'une quelconque des revendications 1 à 5, dans lequel le sel d'acide carboxylique de manganèse est le stéarate de manganèse.

**8.** Procédé selon l'une quelconque des revendications 1 à 5, dans lequel le composé de magnésium organique phosphoré est obtenu en faisant réagir un organomagnésien avec des composés du phosphore contenant de l'hydrogène.

**9.** Procédé selon la revendication 8, dans lequel l'organomagnésien est l'éthylbutylmagnésium.

**10.** Procédé selon l'une quelconque des revendications 1 à 9, dans lequel le composé d'alkylaluminium halogéné est un monohalogénure de dialkylaluminium.

**11.** Procédé selon la revendication 10, dans lequel le monohalogénure de dialkylaluminium est le monochlorure de diéthylaluminium.

**12.** Procédé selon la revendication 10, dans lequel le monohalogénure de dialkylaluminium est le monochlorure de diisobutylaluminium.

**13.** Procédé selon l'une quelconque des revendications 1 à 12, dans lequel on utilise un mélange de monohalogénure de dlalkylaluminium avec du trialkylaluminium.

**14.** Procédé selon l'une quelconque des revendications 1 à 13, dans lequel le produit réactionnel du, composé (i) avec le composé (ii) est obtenu en ajoutant ces composants dans leurs solvants appropriés respectifs et en agitant à une température de 0 à 200 ° C.

## Patentansprüche

**1.** Verfahren zur Herstellung von Polymeren auf Ethylenbasis durch Polymerisieren von Ethylen oder Ethylen und anderen α-Olefinen, **dadurch gekennzeichnet,** daß ein Katalysator verwendet wird, der im wesentlichen besteht aus

(A) einem Reaktionsprodukt, erhältlich durch Reaktion von (i) einer Chromverbindung, bestehend aus Carbonsäuresalzen von Chrom und/oder Chrom-Chelat-Verbindungen mit (ii) einer Metallverbindung, ausgewählt aus der Gruppe bestehend aus Carbonsäuresalzen von Magnesium, organischem, phosphorhaltigen Magnesium und Carbonsäuresalzen von Mangan und

(B) einer halogenhaltigen Alkylaluminium-Verbindung.

**2.** Verfahren nach Anspruch 1, worin das Chrom-Carbonsäure-Salz eine Verbindung der allgemeinen Formel: $Cr(R'COO)_3$ oder $Cr(R'COO)_3$.-$(R'CO)_2O$ ist, worin R' eine Alkylgruppe mit 1 bis 20 Kohlenstoffatomen, eine Arylgruppe oder eine Aralkylgruppe bedeuten.

**3.** Verfahren nach Anspruch 2, worin R' eine Methylgruppe bedeutet.

4. Verfahren nach Anspruch 1, worin die Chrom-Chelat-Verbindung Chrom-tris-acetylacetonat der Formel $Cr(acac)_3$ ist, wobei das Symbol "acac" einen Acetylacetonatrest bedeutet.

5. Verfahren nach Anspruch 1, worin das Chrom-Carbonsäure-Salz Chromstearat ist.

6. Verfahren nach einem der Ansprüche 1 bis 5, worin das Magnesium-Carbonsäuresalz Magnesiumsteara t ist.

7. Verfahren nach einem der Ansprüche 1 bis 5, worin das Mangan-Carbonsäuresalz Manganstearat ist.

8. Verfahren nach einem der Ansprüche 1 bis 5, worin das organische phosphorhaltige Magnesium durch Reaktion von Organomagnesirnm mit wasserstoffhaltigen Phosphor-Verbindungen erhalten wird.

9. Verfahren nach Anspruch 8, worin die Organo-Magnesium-Verbindung Ethylbutylmagnesium ist.

10. Verfahren nach einem der Ansprüche 1 bis 9, worin die halogenhaltige Alkyl-Aluminium-Verbindung Diakylaluminiummonohalogenid ist.

11. Verfahren nach Anspruch 10, worin das Dialkylaluminiummonohalogenid Diethylaluminiummonochlorid ist.

12. Verfahren nach Anspruch 10, worin das Dialkylaluminiummonohalogenid Diisobutylaluminiummonochlorid ist.

13. Verfahren nach einem der Ansprüche 1 bis 12, worin eine Mischung aus Dialkylaluminiummonohalogenid mit Trialkylaluminium verwendet wird.

14. Verfahren nach einem der Ansprüche 1 bis 13, worin das Reaktionsprodukt der Verbindung (i) mit der Verbindung (ii) durch Umsetzen dieser Komponenten in ihren jeweiligen geeigneten Lösungsmitteln und Rühren bei einer Temperatur von 0 bis 200 ° C erhalten wird.